(19) Europäisches Patentamt

European Patent Office

Office européen des brevets

(11) **EP 2 443 594 B1**

(12) **FASCICULE DE BREVET EUROPEEN**

(45) Date de publication et mention
de la délivrance du brevet:
**09.09.2015 Bulletin 2015/37**

(21) Numéro de dépôt: **10734222.2**

(22) Date de dépôt: **03.06.2010**

(51) Int Cl.:
***G06K 19/07*** *(2006.01)*

(86) Numéro de dépôt international:
**PCT/FR2010/051091**

(87) Numéro de publication internationale:
**WO 2010/146278 (23.12.2010 Gazette 2010/51)**

(54) **GESTION DE PUISSANCE DANS UN TRANSPONDEUR ELECTROMAGNETIQUE**

WIDERSTANDSBEWERTUNG DES KOPPLUNGSFAKTORS EINES ELEKTROMAGNETISCHEN TRANSPONDERS

RESISTIVE ASSESSMENT OF THE COUPLING COEFFICIENT OF AN ELECTROMAGNETIC TRANSPONDER

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **19.06.2009 FR 0954148**

(43) Date de publication de la demande:
**25.04.2012 Bulletin 2012/17**

(73) Titulaire: **ST Microelectronics (Rousset) SAS
13790 Rousset (FR)**

(72) Inventeur: **WUIDART, Luc
83910 Pourrières (FR)**

(74) Mandataire: **Thibon, Laurent et al
Cabinet Beaumont
1, rue Champollion
38000 Grenoble (FR)**

(56) Documents cités:
**EP-A1- 1 045 325          GB-A- 2 321 725
US-A1- 2007 164 122**

## Description

Domaine de l'invention

La présente invention concerne de façon générale les systèmes électroniques et plus particulièrement, les systèmes utilisant des transpondeurs électromagnétiques, c'est-à-dire des émetteurs-récepteurs susceptibles d'être interrogés sans contact et sans fil par un terminal de lecture et/ou d'écriture.

Exposé de l'art antérieur

Les systèmes de communication basés sur une modulation d'un champ électromagnétique généré par un terminal sont multiples. Cela va de la simple étiquette électronique servant d'antivol à des systèmes plus complexes où un transpondeur, devant communiquer avec le terminal dans le champ duquel il se trouve, est équipé de fonctions de calcul (porte-monnaie électronique par exemple) ou de traitement d'information.

Les systèmes à transpondeurs électromagnétiques sont basés sur l'emploi de circuits oscillants comprenant un enroulement formant antenne, côté transpondeur et côté terminal. Ces circuits sont destinés à être couplés par champ magnétique proche lorsque le transpondeur entre dans le champ du terminal. Les circuits oscillants du terminal et du transpondeur sont généralement accordés sur une même fréquence correspondant à la fréquence d'excitation du circuit oscillant du terminal.

Dans la plupart des cas, les transpondeurs sont dépourvus d'alimentation autonome et extraient l'alimentation nécessaire aux circuits qu'ils comportent du champ haute fréquence rayonné par l'antenne du terminal.

La qualité de la communication et de l'éventuel transfert d'énergie dépend du couplage entre le terminal et le transpondeur. Ce couplage, qui est inversement proportionnel (non linéaire) à la distance entre le terminal et le transpondeur, conditionne l'amplitude de la tension récupérée par le transpondeur. Il existe donc un besoin de pouvoir évaluer le facteur de couplage courant entre un transpondeur et un terminal dans le champ duquel il se trouve.

Le transpondeur récupère une tension d'alimentation qui dépend fortement du couplage, donc de la consommation des circuits du transpondeur. Par exemple, une diminution de la charge (consommation du transpondeur) entraine une augmentation de la tension et de la puissance téléalimentée. En fonction de la valeur courante du couplage par rapport au couplage optimum, il peut se produire qu'une diminution de la charge entraine que le couplage se rapproche du couplage optimum critique. Le transpondeur se trouve alors dans une situation paradoxale où ses circuits consomment moins mais où la tension et la puissance de téléalimentation atteignent un maximum. Pour un couplage courant k proche du couplage optimum, ce maximum de puissance téléalimentée n'est pas consommé par les circuits du transpondeur et la puissance doit donc être dissipée dans le circuit résonnant, entraînant une surchauffe de l'antenne. Cette surchauffe peut même provoquer la déconnection des contacts de l'antenne, donc la destruction du transpondeur.

Une solution classique consiste à désaccorder le transpondeur quand la tension aux bornes du circuit oscillant excède un seuil.

Le fait de provoquer un désaccord risque d'aggraver la situation en augmentant la puissance téléalimentée. En effet, le désaccord peut être tel qu'il corresponde à un des maxima de puissance transférée pour la valeur désaccordée. Dans ce cas, le désaccord non seulement ne résout pas le problème, mais l'aggrave. Il en découle que modifier la charge du transpondeur en commutant une résistance en parallèle sur le circuit résonant ou en désaccordant ce dernier par une capacité commutable, sans connaître la position du couplage courant par rapport au couplage optimum, on a une chance sur deux d'empirer la situation.

Le document GB-A-2321725 décrit un procédé pour dissiper une puissance excessive reçue par un dispositif sans contact.

Le document US2007/0164122 décrit une carte sans contact et un système de carte sans contact.

Le document EP-A-1045325 décrit un procédé de détection de distance entre un transpondeur électromagnétique et une borne.

Résumé

Il serait souhaitable de pouvoir évaluer le facteur de couplage entre un transpondeur et un terminal.

Il serait également souhaitable de pouvoir évaluer l'évolution de ce facteur de couplage lors d'une communication.

Il serait également souhaitable de pouvoir évaluer le facteur de couplage sans qu'il soit nécessaire d'effectuer un échange de données entre le terminal et le transpondeur.

Il serait également souhaitable de pouvoir effectuer cette évaluation côté transpondeur.

Il serait également souhaitable de proposer une solution indépendante du type de terminal dans le champ duquel se trouve le transpondeur.

Pour atteindre tout ou partie de ces objets ainsi que d'autres, il est prévu un procédé de gestion de la puissance dans un transpondeur électromagnétique dans le champ d'un terminal telque défini dans la revendication 1.

On prévoit également, un transpondeur électromagnétique telque défini dans la revendication 5.

D'autres modes de réalisations sont définis dans les revendications dépendantes.

Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :

la figure 1 est une représentation très schématique d'un système à transpondeur du type auquel s'applique à titre d'exemple la présente invention ;

la figure 2 est un schéma bloc simplifié d'un terminal et d'un transpondeur d'un système de communication à transpondeur électromagnétique ;

la figure 3 illustre un exemple d'allure de la tension aux bornes du circuit oscillant du transpondeur en fonction du facteur de couplage ;

la figure 4 illustre, pour plusieurs facteurs de couplage, des exemples d'allure de la tension aux bornes du circuit oscillant du transpondeur en fonction de la valeur de sa capacité ;

la figure 5 est un schéma bloc fonctionnel illustrant un mode de mise en oeuvre du procédé d'évaluation du facteur de couplage ;

la figure 6 est un schéma bloc d'un mode de réalisation d'un transpondeur adapté à la mise en oeuvre du procédé ; et

la figure 7 est un schéma bloc d'un autre mode de réalisation d'un transpondeur adapté à la mise en oeuvre du procédé.

Description détaillée

De mêmes éléments ont été désignés par de mêmes références aux différentes figures. Par souci de clarté, seuls les étapes et éléments utiles à la compréhension de l'invention ont été représentés et seront décrits. En particulier, les communications entre le transpondeur et le terminal n'ont pas été détaillées, l'invention étant compatible avec toute communication usuelle. De plus, les fonctions susceptibles d'être mises en oeuvre par un terminal ou par un transpondeur, autres que la détermination du facteur de couplage par ce transpondeur, n'ont pas non plus été détaillées, l'invention étant, là encore, compatible avec toute fonction usuelle d'un terminal ou d'un transpondeur.

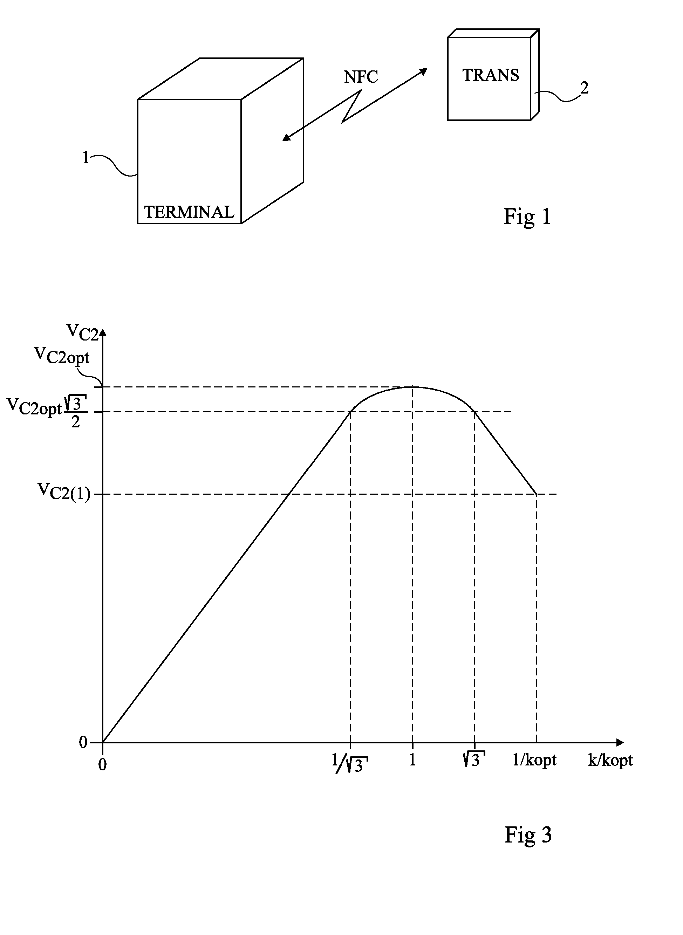

La figure 1 est un schéma bloc d'un système de communication à transpondeur électromagnétique. Un terminal 1 (TERMINAL) est susceptible de communiquer en champ proche (par exemple selon un protocole NFC - Near Field Communication) avec un élément distant, à savoir un transpondeur 2 (TRANS).

Le terminal peut prendre différentes formes, par exemple, une borne de validation de titres de transport, un lecteur de passeports électroniques, un ordinateur portable, un dispositif mobile de communication (téléphone cellulaire, assistant numérique personnel - PDA, etc.), un boîtier électronique de démarrage d'un véhicule automobile, etc.

Le transpondeur peut de même prendre différentes formes, par exemple, une carte à puce, un titre de transport électronique, un passeport électronique, un terminal de télécommunication (téléphone cellulaire, PDA, etc.), une étiquette électronique, etc.

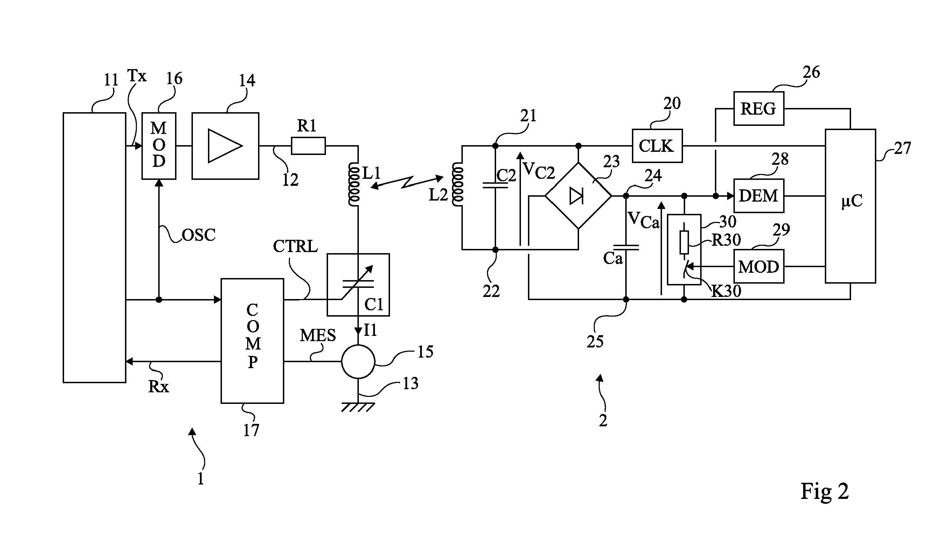

La figure 2 représente, de façon très schématique et simplifiée, un exemple de terminal 1 et de transpondeur 2.

Le terminal 1 comporte un circuit oscillant, généralement série, formé d'une inductance L1 en série avec un condensateur C1 et une résistance R1. Ce circuit oscillant série est, dans l'exemple de la figure 2, connecté entre une borne 12 de sortie d'un amplificateur ou coupleur d'antenne 14 et une borne 13 à un potentiel de référence (généralement la masse). Un élément 15 de mesure du courant dans le circuit oscillant est intercalé, par exemple, entre l'élément capacitif C1 et la masse 13. Cet élément de mesure 15 fait partie d'une boucle de régulation de phase qui sera décrite par la suite. L'amplificateur 14 reçoit un signal de transmission haute fréquence issu d'un modulateur 16 (MOD) qui reçoit une fréquence de référence (signal OSC) par exemple d'un oscillateur à quartz (non représenté). Le modulateur 16 reçoit si besoin un signal Tx provenant d'un circuit 11 de commande et d'exploitation des transmissions. Ce circuit 11 est généralement pourvu d'un microprocesseur de traitement de commandes et des données, communiquant avec différents circuits d'entrée/sortie (clavier, écran, élément d'échange avec un serveur, etc.) et/ou de traitement non détaillés. Les éléments du terminal 1 tirent le plus souvent l'énergie nécessaire à leur fonctionnement d'un circuit d'alimentation (non représenté) raccordé, par exemple, au réseau de distribution électrique (secteur) ou à une batterie (par exemple, celle d'un véhicule automobile ou d'un téléphone ou ordinateur portable). Le modulateur 16 fournit une porteuse haute fréquence (par exemple, à 13,56 MHz) au circuit oscillant série L1-C1 qui engendre un champ magnétique.

L'élément capacitif C1 est, par exemple, un élément à capacité variable et commandable par un signal CTRL. Cet élément participe à la régulation de phase du courant I1 dans l'antenne L1 par rapport à un signal de référence.

Cette régulation est une régulation du signal haute fréquence, c'est-à-dire du signal de la porteuse correspondant au signal fourni à l'amplificateur 14 en l'absence de données Tx à transmettre. La régulation est effectuée en faisant varier la capacité C1 du circuit oscillant du terminal de façon à maintenir le courant dans l'antenne en relation de phase constante avec un signal de référence. Ce signal de référence correspond, par exemple, au signal OSC fourni au modulateur 14. Le signal CTRL est issu d'un circuit 17 (COMP) dont le rôle est de détecter l'écart de phase par rapport au signal de référence et de modifier en conséquence la capacité de l'élément C1. Le comparateur reçoit une information MES sur le courant I1 dans le circuit oscillant détecté par l'élément de mesure 15 (par exemple, un transformateur d'intensité ou une résistance).

Un transpondeur 2, apte à coopérer avec le terminal 1, comporte un circuit oscillant, par exemple parallèle, formé d'une inductance L2 en parallèle avec un condensateur C2 entre deux bornes 21 et 22. Le circuit oscillant parallèle (appelé circuit résonant en réception) est destiné à capter le champ magnétique engendré par le circuit oscillant L1-C1 du terminal 1. Les circuits L2-C2 et L1-C1 sont accordés sur une même fréquence de résonance (par exemple 13,56 MHz). Les bornes 21 et 22 sont reliées à deux bornes d'entrée alternatives d'un pont redresseur 23 (le plus souvent double alternance). Les bornes de sortie redressée du pont 23 définissent respectivement une borne positive 24 et une borne de référence 25. Un condensateur Ca est connecté entre les bornes 24 et 25 de façon à lisser la tension redressée. Le cas échéant, l'énergie récupérée sert à recharger une batterie non représentée.

Quand le transpondeur 2 se trouve dans le champ du terminal 1, une tension haute fréquence est engendrée aux bornes du circuit résonant L2-C2. Cette tension, redressée par le pont 23 et lissée par le condensateur Ca, fournit une tension d'alimentation à des circuits électroniques du transpondeur par l'intermédiaire d'un régulateur de tension 26 (REG). Ces circuits comprennent généralement une unité de traitement 27 (par exemple un microcontrôleur $\mu C$) associée à une mémoire (non représentée), un démodulateur 28 (DEM) des signaux éventuellement reçus du terminal 1, et un modulateur 29 (MOD) pour transmettre des informations au terminal. Le transpondeur est généralement synchronisé au moyen d'une horloge (CLK) extraite, par un bloc 20, du signal haute fréquence récupéré, avant redressement, sur une des bornes 21 ou 22. Le plus souvent, tous les circuits électroniques du transpondeur 2 sont intégrés dans une même puce.

Pour transmettre des données du terminal 1 vers le transpondeur, le circuit 16 module (généralement en amplitude) la porteuse (signal OSC) en fonction du signal Tx. Côté transpondeur 2, ces données sont démodulées par le démodulateur 28 à partir de la tension $V_{Ca}$. Le cas échéant, le démodulateur prélève le signal à démoduler en amont du pont de redressement.

Pour transmettre des données du transpondeur 2 vers le terminal 1, le modulateur 29 commande un étage de modulation 30 (rétromodulation) de la charge constituée par les circuits du transpondeur sur le champ magnétique produit par le terminal. Cet étage est généralement constitué d'un interrupteur électronique K30 (par exemple, un transistor) et d'une résistance R30 (ou d'une capacité), en série entre les bornes 24 et 25. L'interrupteur K30 est commandé à une fréquence (par exemple, 847,5 kHz) dite de sous-porteuse, nettement inférieure (généralement avec un rapport d'au moins 10) à la fréquence du signal d'excitation du circuit oscillant du terminal 1. Lorsque l'interrupteur K30 est fermé, le circuit oscillant du transpondeur est soumis à un amortissement supplémentaire par rapport à la charge constituée par les circuits 20, 26, 27, 28, et 29 de sorte que le transpondeur prélève une quantité d'énergie plus importante du champ magnétique haute fréquence. Côté terminal 1, l'amplificateur 14 maintient constante l'amplitude du signal d'excitation haute fréquence. Par conséquent, la variation d'énergie du transpondeur se traduit par une variation d'amplitude et de phase du courant dans l'antenne L1. Cette variation est détectée par un démodulateur d'amplitude ou de phase du terminal. Dans le mode de réalisation illustré en figure 2, le comparateur 17 intègre un démodulateur de phase servant également à démoduler le signal provenant du transpondeur. Par conséquent, ce comparateur 17 fournit un signal Rx restituant une rétromodulation éventuelle de données reçues d'un transpondeur au circuit 11. D'autres circuits de démodulation peuvent être prévus, par exemple un circuit exploitant une mesure de la tension aux bornes du condensateur C1.

De nombreuses variantes existent pour coder/décoder et moduler/démoduler les communications entre un transpondeur et un terminal.

Le temps de réponse de la boucle de régulation de phase est suffisamment long pour ne pas gêner la rétromodulation éventuelle provenant d'un transpondeur, et suffisamment courte devant la vitesse de passage d'un transpondeur dans le champ du terminal. On peut parler de régulation statique par rapport aux fréquences de modulation (par exemple, la fréquence de la porteuse de téléalimentation de 13,56 MHz et la fréquence de rétromodulation de 847,5 KHz utilisée pour transmettre des données du transpondeur vers la borne).

Un exemple de terminal à régulation de phase est décrit dans le document EP-A-0 857 981.

Le fait que la phase soit régulée côté terminal permet d'exploiter des mesures de courant et de tension dans le circuit oscillant du transpondeur pour en déduire des informations relatives au couplage du transpondeur lorsqu'il est dans le champ du terminal. Le coefficient de couplage entre le circuit oscillant du terminal et celui du transpondeur dépend essentiellement de la distance séparant le transpondeur du terminal. Le coefficient de couplage, noté k, est toujours compris entre 0 et 1. Il peut être défini par la formule :

$$k = \frac{M}{\sqrt{L1 \cdot L2}}, \qquad\qquad \text{(formule 1)}$$

dans laquelle M représente l'inductance mutuelle entre les inductances L1 et L2 des circuits oscillants du terminal et du transpondeur.

On définit un couplage optimum comme étant la position à laquelle la tension $V_{C2}$ aux bornes du circuit oscillant du transpondeur est maximale. Ce couplage optimum, noté $k_{opt}$, peut s'exprimer :

$$k_{opt} = \sqrt{\frac{L2}{L1} \cdot \frac{R1}{R2}}, \qquad\qquad \text{(formule 2)}$$

où R2 représente la résistance équivalente à la charge (load) constituée par les éléments du transpondeur sur son propre circuit oscillant. En d'autres termes, la résistance R2 représente la résistance équivalente de tous les circuits (microprocesseur, moyen de rétromodulation, etc.) du transpondeur 2, ramenée en parallèle sur le condensateur C2 et l'inductance L2 (avant ou après le pont redresseur). On appellera "charge résistive" la conductance apportée par les circuits du transpondeur, donc leur consommation. Le niveau de cette charge est symbolisé par la résistance R2 en parallèle aux bornes du circuit oscillant. Dans la formule 2 ci-dessus, on a négligé la résistance série de l'inductance L1 (antenne du terminal). On peut également considérer que la valeur de cette résistance série est, par simplification, incluse dans la valeur de la résistance R1.

La figure 3 représente un exemple d'allure de la tension $V_{C2}$ récupérée côté transpondeur en fonction du couplage normalisé $k/k_{opt}$ par rapport au couplage optimum. La courbe part de l'origine des ordonnées (tension nulle) pour un couplage nul. Cela correspond à un éloignement du transpondeur et du terminal tel qu'aucun signal n'est capté par le transpondeur. La tension $V_{C2}$ atteint un maximum $V_{C2opt}$ pour le coefficient de couplage optimum $k_{opt}$ ($k/k_{opt} = 1$), puis décroît jusqu'à une valeur intermédiaire VC2(1) atteinte au couplage $k = 1$.

Comme l'illustre la figure 3, la tension $V_{C2}$ passe par deux points d'inflexion pour des valeurs de couplage correspondant à des rapports $k/k_{opt} = 1/\sqrt{3}$ et $k/k_{opt} = \sqrt{3}$, pour lesquels la tension $V_{C2}$ prend la valeur

$$V_{C2opt} \cdot \frac{\sqrt{3}}{2}.$$

Pour évaluer, côté transpondeur, son couplage avec le terminal, on exploite l'information de la tension $V_{C2}$ aux bornes de l'élément capacitif C2 de son circuit oscillant. Cette tension est donnée par la relation :

$$V_{C2} = \frac{I2}{\omega \cdot C_2}, \qquad\qquad \text{(formule 3)}$$

où 12 représente le courant dans le circuit oscillant du transpondeur, et où $\omega$ représente la pulsation du signal.

Le courant 12 est égal à :

$$I2 = \frac{M \cdot \omega \cdot I1}{Z2}, \qquad\qquad \text{(formule 4)}$$

où I1 représente le courant dans le circuit oscillant du terminal et où Z2 représente l'impédance du transpondeur.

L'impédance Z2 du transpondeur est donnée par la relation suivante :

$$Z2^2 = X2^2 + \left(\frac{L2}{R2.C2}\right)^2, \qquad\qquad \text{(formule 5)}$$

où X2 représente la partie imaginaire de l'impédance du circuit oscillant :

$$X2 = \omega \cdot L2 - \frac{1}{\omega \cdot C2} \cdot \qquad \text{(formule 6)}$$

Par ailleurs, le courant I1 dans le circuit oscillant du terminal est donné par la relation :

$$I1 = \frac{Vg}{Z1_{app}}, \qquad \text{(formule 7)}$$

où Vg désigne une tension, dite de générateur, excitant le circuit oscillant du terminal, et où $Z1_{app}$ représente l'impédance apparente du circuit oscillant.

Le fait de réguler la phase du circuit oscillant du terminal permet que toutes les variations qui auraient tendance à modifier, de façon statique devant les fréquences de modulation, la partie imaginaire de la charge (load) constituée par le transpondeur, soient compensées par la boucle de régulation de phase. Ainsi, on s'assure qu'en fonctionnement statique la partie imaginaire de l'impédance $Z1_{app}$ est nulle. Par conséquent, cette impédance $Z1_{app}$ devient égale à la résistance apparente $R1_{app}$ (partie réelle de l'impédance) et peut s'exprimer sous la forme :

$$Z1_{app} = R1_{app} = R1 + \frac{k^2 \cdot \omega^2 \cdot L1 \cdot L2^2}{Z2^2 \cdot R2 \cdot C2} \cdot \qquad \text{(formule 8)}$$

Lorsque les circuits oscillants sont accordés, on peut considérer que la partie imaginaire X2 de l'impédance Z2 est, en première approximation, proche de zéro. Il en découle que la valeur de l'impédance Z2 se réduit à sa partie réelle :

$$Z2 = \frac{L2}{R2 \cdot C2} \cdot \qquad \text{(formule 9)}$$

En reportant cette simplification dans les formules 4 et 8, et en reportant la formule 4 dans la formule 3, on obtient, pour la tension récupérée $V_{C2}$ aux bornes du circuit oscillant du transpondeur, notée $V_{C2tun}$ quand ce dernier est accordé, la formule :

$$V_{C2} = k \cdot \sqrt{\frac{L1}{L2}} \cdot \frac{Vg}{\frac{R1}{R2} + k^2 \cdot \frac{L1}{L2}} \cdot \qquad \text{(formule 10)}$$

En position de couplage optimum $k_{opt}$, la tension maximale $V_{C2(kopt)}$ est donc donnée par la formule (en combinant les formules 2 et 9) :

$$V_{C2kopt} = \frac{Vg}{2} \cdot \sqrt{\frac{R2}{R1}} \cdot \qquad \text{(formule 11)}$$

On notera que la formule 10 n'est applicable qu'en considérant le circuit oscillant du transpondeur L2-C2 réglé à la fréquence d'accord, c'est-à-dire que $\omega \cdot \sqrt{L2 \cdot C2} = 1$.

En combinant les formules 10 et 11 et en exprimant le couplage de façon normalisée par le couplage optimum $(k/k_{opt})$, on obtient l'expression suivante de la tension $V_{C2}$ :

$$V_{C2} = \frac{2 \cdot V_{C2kopt}}{\dfrac{k}{k_{opt}} + \dfrac{k_{opt}}{k}} \cdot \qquad \text{(formule 12)}$$

Pour une valeur de couplage k donnée, en considérant que l'impédance du circuit oscillant du terminal ne varie pas et que les circuits restent accordés, le rapport entre les coefficients courants k et les coefficients optimum $k_{opt]R20}$ et $k_{opt]R21}$, respectivement pour une résistance R2 de valeur R20 et de valeur R21 donne, d'après la formule 2, l'expression suivante :

$$\frac{\dfrac{k}{k_{opt]R20}}}{\dfrac{k}{k_{opt]R21}}} = \sqrt{\frac{R20}{R21}} \cdot \qquad \text{(formule 13)}$$

Toujours pour une valeur de couplage k donnée et en considérant que l'impédance du circuit oscillant du terminal ne varie pas et que les circuits restent accordés, le rapport entre les valeurs $V_{C2]R21}$ et $V_{C2]R20}$ de la tension $V_{C2}$, respectivement pour les valeurs R21 et R20 de la résistance R2, donne la relation suivante :

$$\frac{V_{C2]R21}}{V_{C2]R20}} = \frac{\left(\dfrac{k}{k_{opt]R20}}\right)^2 + 1}{\left(\dfrac{k}{k_{opt]R20}}\right)^2 + \dfrac{R20}{R21}} \cdot \qquad \text{(formule 14)}$$

Il ressort de la formule 14 qu'en augmentant la valeur de la résistance R2 d'une première valeur R20 vers une second valeur R21 supérieure (ce qui revient à diminuer la charge des circuits du transpondeur sur le circuit oscillant L2-C2), la tension $V_{C2]R21}$ sera supérieure à la tension $V_{C2]R20}$.

La formule 14 peut encore s'écrire :

$$\left(\frac{k}{k_{opt]R20}}\right)^2 = \frac{1 - \dfrac{V_{C2]R21}}{V_{C2]R20}} \cdot \dfrac{R20}{R21}}{\dfrac{V_{C2]R21}}{V_{C2]R20}} - 1} \cdot \qquad \text{(formule 15)}$$

Il ressort de la formule 15 qu'à partir d'une mesure de la tension $V_{C2}$ avec les deux valeurs de résistances R20 et R21, on peut obtenir le rapport du couplage courant sur le couplage optimum avec la charge équivalente à la résistance R20, ce qui fournit une information indirecte sur la position du couplage courant par rapport au couplage optimum avec la résistance R20. Pour effectuer cette évaluation, on prendra de préférence une valeur R21 de résistance R2 supérieure à la valeur R20.

Toutefois, cette information est insuffisante pour savoir s'il existe un risque de surchauffe du circuit résonant. Ce risque existe dès que le courant consommé par les circuits du transpondeur est inférieur à une valeur donnée et que le couplage courant k est proche du couplage optimum. En effet, dans la zone où le couplage k est proche de l'optimum, le maximum de puissance est transféré à l'ensemble du transpondeur indépendamment du niveau de charge (indépendamment de la valeur de la résistance R2) puisqu'au couplage optimum la puissance $P_{opt}$ ne dépend que de la tension Vg de générateur et de la résistance R1 du terminal. En effet, la puissance $P_{opt}$ vaut $V_{C2(kopt)}^2/R2$ (formule 16). En utilisant la formule 11, on obtient : $P_{opt} = Vg^2/4*R1$ (formule 17). Ce maximum de puissance transférée du terminal au transpondeur se répartit entre la résistance propre des pertes dans le circuit résonnant et la résistance R2 correspondant au niveau de consommation des circuits du transpondeur. Lorsque le courant consommé devient trop faible, cela signifie que la valeur de R2 devient très grande et est donc négligeable devant la résistance propre du circuit résonant L2-C2. La puissance transférée doit donc être dissipée dans cette résistance propre du circuit LC, ce qui risque de détériorer l'antenne.

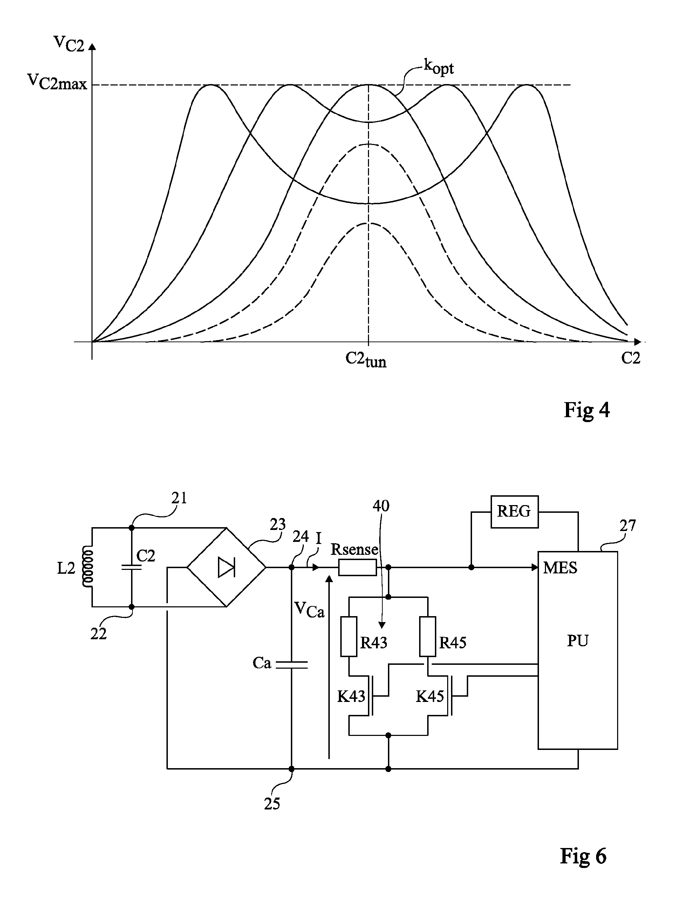

La figure 4 illustre les effets d'un désaccord du circuit oscillant selon la position du couplage par rapport au couplage optimum. Cette figure représente des exemples d'allures de la tension $V_{C2}$ en fonction de la valeur de la capacité C2 pour plusieurs valeurs de couplage k. On suppose que la valeur de la résistance R2 ne varie pas. Au couplage optimum $k_{opt}$, le maximum de la tension $V_{C2max}$ est obtenu à l'accord du circuit oscillant (pour simplifier, on considère qu'un éventuel désaccord n'est provoqué que par une variation de la capacité C2 et que la valeur de l'inductance L2 reste fixe). Pour des couplages inférieurs au couplage optimum (pointillés en figure 4), la tension maximale obtenue est forcément inférieure à la tension maximale au couplage optimum et diminue par rapport à cette valeur en cas de désaccord par rapport à la valeur $C2_{tun}$. Par contre, pour des couplages supérieurs au couplage optimum, on voit que la tension $V_{C2max}$ peut être atteinte même en désaccordant le circuit. Par conséquent, le désaccord du circuit oscillant pour protéger d'une surchauffe n'est pas non plus toujours la solution.

Par conséquent, on prévoit de réduire le maximum de puissance de façon différente selon que le couplage courant est plutôt supérieur ou plutôt inférieur au couplage optimum.

Lorsque le couplage courant est inférieur au couplage optimum, on provoque un désaccord du circuit oscillant, de préférence en modifiant la valeur de la capacité C2. En effet, il est aisé de rajouter ou de réduire la valeur de la capacité en commutant des éléments capacitifs intégrés en parallèle avec la capacité C2.

On peut également prévoir de désaccorder le circuit en commutant un réseau d'antennes modifiant la valeur de l'inductance L2. Toutefois, un désaccord capacitif sera souvent plus facile à mettre en oeuvre.

On veillera à ce que le désaccord ne soit pas trop important, pour ne pas faire perde au transpondeur sa téléalimentation.

Lorsque le couplage courant est supérieur au couplage optimum, il faut éviter de désaccorder le circuit oscillant pour ne pas risquer de faire coïncider la nouvelle valeur de capacité avec un des deux maxima de tension qui encadrent le couplage optimum (voir figure 4).

On prévoit donc dans ce cas de diminuer la valeur R20 de la résistance R2 jusqu'à une valeur R2x telle qu'on atteigne le couplage optimum correspondant à ce niveau de charge.

Une fois que la tension $V_{C2]R2x}$ correspondant au couplage optimum est atteinte pour une valeur R2x < R20, le transpondeur est alors dans de bonnes conditions pour être désaccordé.

La puissance transférée est alors en partie dissipée dans la résistance R2x, puis réduite par désaccord du circuit oscillant à partir de $k_{opt]R2x}$.

En combinant les formules 13 et 14, on obtient :

$$\frac{V_{C2]R21}}{V_{C2]R20}} = \frac{\left(\dfrac{k}{k_{opt]R21}}\right)^2 + \dfrac{R21}{R20}}{\left(\dfrac{k}{k_{opt]R21}}\right)^2 + 1} \qquad \text{(formule 18)}$$

Lorsque le couplage k vaut $k_{opt]R21}$, cette relation devient :

$$\frac{V_{C2opt]R21}}{V_{C2]R20}} = \frac{1 + \dfrac{R21}{R20}}{2} \qquad \text{(formule 19)}$$

Pour un couplage k donné, on peut donc évaluer la valeur R2x à laquelle on sera placé à l'optimum critique à partir des relations ci-dessous :

$$V_{C2opt]R2x} = V_{C2]R20} \; \frac{1 + 1\left/ \left(\dfrac{k}{k_{opt]R20}}\right)^2\right.}{2} \; . \quad \text{(formule 20)}$$

avec

$$\left(\frac{k}{k_{opt]R2x}}\right)^2 = \frac{R20}{R2x} \; . \qquad \text{(formule 21)}$$

En pratique, on ne mesure pas directement la tension aux bornes du circuit oscillant, mais la tension lissée aux bornes du condensateur $V_{Ca}$ en sortie du pont redresseur 23. Cette tension $V_{Ca}$ est proportionnelle à la tension $V_{C2}$. Comme on évalue des rapports de tension, il n'est pas nécessaire de connaître le coefficient de proportionnalité entre les tensions $V_{C2}$ et $V_{Ca}$. Dans un exemple de réalisation particulier, la mesure est effectuée par le microprocesseur. La mémorisation des valeurs des tensions mesurées s'effectue, soit de façon analogique, mais préférentiellement de façon numérique sur plusieurs bits dont le nombre dépend de la précision d'analyse souhaitée.

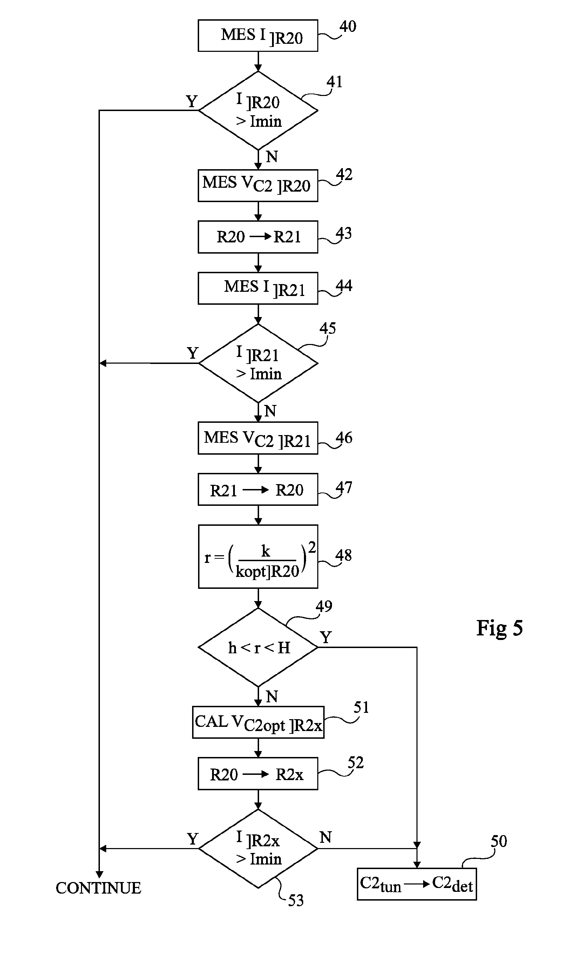

La figure 5 est un organigramme illustrant un mode de réalisation du procédé de gestion d'énergie.

On commence (bloc 40, MES $I_{]R20}$) par mesurer le courant consommé dans les circuits du transpondeur. Cette mesure peut être effectuée au moyen d'un détecteur de courant associé au régulateur de tension ou peut être évaluée par le microcontrôleur à partir des tâches qu'il exécute.

On compare (bloc 41, $I_{]R20} > I_{min}$) la valeur mesurée $I_{]R20}$ par rapport à une valeur minimale $I_{min}$. Si le courant consommé est supérieur (sortie Y du bloc 41), donc suffisant, il n'y a pas à intervenir et on sort (CONTINUE) de la surveillance.

Sinon (sortie N du bloc 41), on mesure (bloc 42, MES $U_{C2]R20}$) la tension aux bornes du circuit oscillant dans les conditions courantes.

Puis (bloc 43, R20->R21), on commute la valeur de cette résistance vers une valeur R21 inférieure. Le choix d'une valeur R21 inférieure limite les risques de surchauffe.

On mesure alors (bloc 44, MES $I_{]R21}$) le courant consommé avec la résistance R21. Si (bloc 45, $I_{]R21}>I_{min}$) la diminution de la résistance a permis de repasser au dessus du courant minimum (sortie Y du bloc 45), alors, on a résolu le problème et on sort de l'itération du programme de gestion d'énergie (CONTINUE).

Sinon (sortie N du bloc 45), on mesure (bloc 46, MES $V_{C2]R21}$) la tension avec la résistance R21 pour évaluer la position du couplage par rapport au couplage optimum avec la résistance R20. Cette évaluation passe par l'application (bloc 48, $r = (k/k_{opt})^2$) de la formule 15 (ou le calcul d'une valeur représentative du rapport r).

Dès la mesure effectuée, on repasse de préférence avec la résistance R20 (bloc 47, R21->R20).

Le rapport r est comparé (bloc 49, h<r<H) par rapport à deux seuils h et H pour déterminer s'il se trouve dans une plage acceptable. Par exemple, les deux seuils h et H sont choisis pour correspondre aux points d'inflexion de l'allure de la figure 3, c'est-à-dire h=1/3 et H=3. D'autres valeurs pourront être choisies pourvu, bien entendu, que h soit inférieur à l'unité (de préférence h est supérieur à 1/2) et que H soit supérieur à l'unité (de préférence h est inférieur à 10).

Si le rapport r est compris entre les deux seuils h et H (sortie Y du bloc 49), cela signifie que l'on peut désaccorder le circuit oscillant (bloc 50, $C2_{tun}$->$C2_{det}$) sans risquer de surchauffe. On effectue alors ce désaccord à une valeur $C2_{det}$ choisie pour que la tension récupérée par téléalimentation soit suffisante au fonctionnement du transpondeur.

Selon un premier mode de réalisation, si le rapport r est hors de la plage fixée (sortie N du bloc 49), on calcule (bloc 51, $V_{C2opt]R2x}$) d'après les formules 20 et 21 la valeur R2x de résistance R2 pour replacer le transpondeur dans une position de couplage optimum. Puis (bloc 52, R20->R2x), on modifie la valeur de la résistance R2 vers cette valeur estimée.

Selon une variante préférée, on augmente progressivement la charge résistive en diminuant la valeur de R2, jusqu'à ce que la tension $V_{C2}$ atteigne la valeur $V_{C2opt]R2x}$ calculée avec la formule 20.

En variante, le microcontrôleur interroge une table de correspondance préalablement mémorisée (par exemple dans une phase d'apprentissage ou lors de la conception du transpondeur) pour connaître, à partir de la valeur du rapport r, la valeur à donner à la résistance R2.

On teste ensuite (bloc 53, $I_{]R2x}>I_{min}$) si, avec cette nouvelle valeur R2x de résistance, la consommation du circuit est suffisante. Dans l'affirmative (sortie Y du bloc 53), on sort de l'itération de gestion d'énergie. Sinon (sortie N du bloc 53), on effectue un désaccord du circuit oscillant (bloc 50).

Le test 45 est optionnel. En effet, on pourra poursuivre l'exécution du procédé pour se placer à la résistance R2x si le couplage courant ne permet pas un désaccord. Ce test 45 permet toutefois de sortir plus rapidement de l'itération si la résistance R21 s'avère suffisante.

Pour simplifier, les différents tests considèrent des inégalités strictes. Bien entendu, il faut choisir l'opération en cas d'égalité. On pourra à chaque fois choisir l'une ou l'autre des options. De plus, il est clair que les différentes mesures sont mémorisées pour permettre leur exploitation par le microcontrôleur.

La figure 6 est un schéma-blocs d'un mode de réalisation d'un transpondeur 2, équipé pour déterminer automatiquement, lorsqu'il est dans le champ d'un terminal (non représenté), le couplage courant par rapport au couplage optimum. La représentation de la figure 6 est simplifiée par rapport à celle de la figure 2. En particulier, les éléments de démodulation, de rétromodulation et d'obtention de la fréquence d'horloge n'ont pas été illustrés.

La mesure du courant de consommation I du circuit du transpondeur est réalisée par une résistance $R_{sense}$ montée en détecteur de courant. La mesure du courant de consommation donne une image indirecte de la résistance équivalente de la charge. Ainsi, on peut dire que si la valeur mesurée est inférieure ou égale à la valeur minimale, le courant consommé sera faible et que, de manière équivalente, la résistance est inférieure à la valeur R20. En d'autres termes, si le courant est inférieur au courant minimum, et que le couplage courant k est proche du couplage optimum, on en déduit que le transpondeur se trouve dans des conditions de surchauffe du circuit résonnant.

Comme précédemment, le transpondeur 2 est basé sur un circuit oscillant parallèle L2-C2 dont les bornes 21 et 22 sont reliées aux bornes d'entrée d'un pont de redressement 23. Entre les bornes 24 et 25 du pont redresseur 23, est prévu un circuit résistif commutable 40. Par exemple, deux résistances R43 et R45 sont connectées en parallèle en étant chacune en série avec un interrupteur K43, respectivement K45. Les interrupteurs K43 et K45 (par exemple, des transistors MOS) sont destinés à être commutés pour mettre en oeuvre le procédé de détermination de la position de couplage. L'unité de traitement 27 (PU) reçoit une information sur la tension $V_{Ca}$ sur une entrée MES pour mettre en oeuvre le procédé décrit ci-dessus. Dans l'exemple de la figure 5, lorsque les deux résistances R43 et R45 sont fonctionnellement connectées, la résistance R2 (charge des circuits du transpondeur) représente la valeur R20. La déconnexion d'une des résistances (par exemple, la résistance R43) augmente la résistance R2 vers la valeur R21. D'autres connexions et commutations peuvent être prévues selon la variante du procédé mis en oeuvre. Par exemple, une seule résistance commutable peut être utilisée en considérant qu'une des deux valeurs de la résistance R2 correspond à la charge résistive des autres circuits du transpondeur.

Selon un mode de réalisation préféré, la résistance commutable correspond à celle utilisée pour une rétromodulation résistive. On effectue une première mesure en commutant la résistance de rétromodulation pour qu'elle soit fonctionnellement dans le circuit (interrupteur K30 à l'état passant dans l'exemple de la figure 2). On mesure la tension $V_{C2]R20}$. Puis, on ouvre l'interrupteur K30 et on mesure la tension $V_{C2]R21}$. La mise en oeuvre du procédé décrit ne requiert alors aucune modification structurelle d'un transpondeur équipé d'un microcontrôleur. Il suffit de programmer ce microcontrôleur pour qu'il commute ainsi la résistance de rétromodulation.

Les seuils exploités pour déterminer la position par rapport au couplage optimum ne dépendent que des valeurs R20 et R21 qui sont connues pour un transpondeur donné. Par conséquent, le transpondeur n'a pas nécessairement besoin de moyens de calcul évolués de type microprocesseur mais peut simplement mesurer les tensions, calculer le rapport et le comparer par rapport à des seuils analogiques générés, par exemple, par des ponts diviseurs résistifs. Selon un autre exemple, les seuils sont précalculés et stockés dans une mémoire non volatile du transpondeur.

En variante, l'augmentation ou la diminution de la résistance équivalente R2 est provoquée par une variation de la consommation des circuits du transpondeur, typiquement de l'unité de traitement 27. Par exemple, pour diminuer la valeur de la résistance R2 (augmenter la consommation), on déclenche l'exécution de calculs ou de traitement par l'unité 27. On peut également provoquer une augmentation de la résistance équivalente R2 en réduisant la consommation de l'unité 20 en interrompant certains calculs. La variation de la résistance R2 est connue à partir du moment où la consommation de différentes tâches à exécuter par l'unité 27 est connue, ce qui est généralement estimé à la conception du transpondeur ou peut être obtenu dans une phase d'apprentissage avec un terminal quelconque.

Les calculs requis pour évaluer le couplage courant sont suffisamment simples pour que leur temps d'exécution soit négligeable par rapport à la vitesse de déplacement d'un transpondeur devant un terminal (donc la vitesse de variation du coefficient de couplage). Les modes de réalisation décrits sont par ailleurs applicables au cas où le transpondeur reste posé sur une surface de réception du terminal, le couplage ne variant donc pas pendant toute la communication.

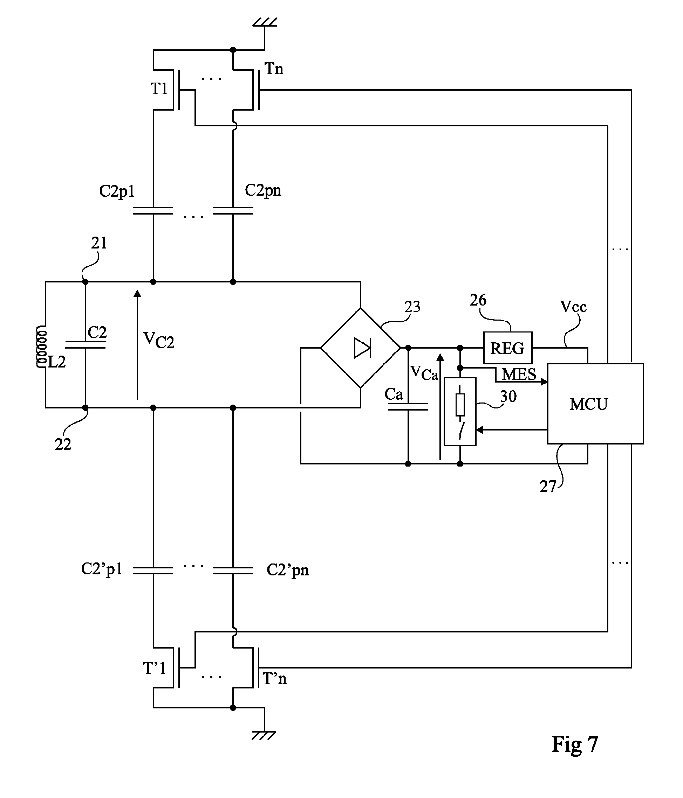

La figure 7 représente un mode de réalisation d'un transpondeur équipé d'un circuit de désaccord du condensateur C2.

Comme précédemment, le transpondeur 2 est basé sur un circuit oscillant parallèle L2-C2 dont les bornes 21 et 22 sont reliées aux bornes d'entrée d'un pont de redressement 23. L'unité de traitement 27 (PU) reçoit une information sur la tension $V_{Ca}$ sur une entrée MES pour mettre en oeuvre le procédé décrit ci-dessus. Le désaccord est obtenu en augmentant la capacité du circuit oscillant par une mise en parallèle de condensateurs C2pi et C2'pi (i étant compris entre 1 et n>=1) rendus commutables par des interrupteurs (par exemple des transistors MOS) Ti et T'i. Plus précisément, au moins un condensateur C2'pi, respectivement C'2'pi, en série avec un transistor Ti, respectivement T'i, est connecté entre la borne 21, respectivement 22, du circuit résonant L2-C2 et la masse. Les transistors Ti sont individuellement commandables par des signaux provenant du microcontrôleur 27 en fonction des mesures effectuées conditionnant l'amplitude souhaitée pour le désaccord. En variante, des condensateurs commutables sont connectés en parallèle sur le circuit oscillant. Toutefois, un avantage de la solution de la figure 7 est que les transistors sont plus facilement commandables car les signaux de commandes peuvent être référencés à la masse.

Les circuits des figures 6 et 7 sont combinables.

L'évaluation du couplage peut être effectuée périodiquement pendant une communication. La seule précaution est de ne pas évaluer le couplage pendant une rétromodulation du transpondeur. Une première évaluation est par exemple effectuée dès que l'énergie récupérée par le transpondeur est suffisante pour que le microprocesseur 27 fonctionne. Puis, on effectue des mesures périodiques pendant la communication.

Divers modes de réalisation avec diverses variantes ont été décrits ci-dessus. On notera que l'homme de l'art pourra combiner divers éléments de ces divers modes de réalisation et variantes sans faire preuve d'activité inventive. En particulier, la mise en oeuvre pratique de l'invention en programmant le microcontrôleur sont à la portée de l'homme du métier à partir des indications fonctionnelles données ci-dessus. De plus, les calculs par formule pourront être remplacés par des comparaison/sélection de valeurs mémorisées dans des tables du microcontrôleur.

**Revendications**

1. Procédé de gestion de la puissance dans un transpondeur électromagnétique (2) dans le champ d'un terminal (1), comportant les étapes suivante :

   évaluer (40) la consommation des circuits du transpondeur ; et
   si cette consommation est inférieure à un seuil, évaluer le facteur de couplage courant (k) entre le transpondeur et le terminal (1) et, en fonction du couplage courant :

      provoquer (52) une augmentation de la consommation du transpondeur ; ou
      provoquer (50) un désaccord d'un circuit oscillant du transpondeur,
      l'évaluation du facteur de couplage incluant une comparaison d'un rapport (r) entre le facteur de couplage courant du transpondeur avec le terminal et une position de couplage optimum ($k_{opt]R20}$) avec une première valeur (R20) de charge résistive (R2), ce rapport étant obtenu à partir :

         d'une première information, relative au niveau d'une tension continue ($V_{Ca}$) fournie par un redresseur (23) aux bornes d'un circuit oscillant (L2, C2), mesurée et mémorisée (42) pour la première valeur (R20) de charge résistive (R2) ; et
         d'une seconde information, relative au niveau de ladite tension continue, mesurée et mémorisée (46) pour une seconde valeur (R21) de charge résistive.

2. Procédé selon la revendication 1, dans lequel le désaccord (50) est effectué vers une valeur préservant une téléalimentation du transpondeur.

3. Procédé selon les revendications 1 ou 2, dans lequel une variation de la charge résistive (R2) entre les première et seconde valeurs (R20, R21) est obtenue en modifiant la consommation de circuits de traitement (27) que comporte le transpondeur.

4. Procédé selon la revendication 3, dans lequel une variation de la charge résistive (R2) entre les première et seconde valeurs (R20, R21) est obtenue en commutant un élément résistif de rétromodulation (30) que comporte le transpondeur (2).

5. Transpondeur électromagnétique comportant :

   un circuit oscillant (L2, C2) en amont d'un circuit de redressement (23) propre à fournir une tension continue ($V_{Ca}$) lorsque le transpondeur se trouve dans le champ magnétique d'un terminal (1) ; et
   au moins une unité de traitement (27) programmée pour mettre en oeuvre le procédé selon l'une quelconque des revendications 1 à 4.

6. Transpondeur selon la revendication 5, comportant en outre au moins un élément résistif commutable (30, 40) propre à être fonctionnellement connecté en parallèle sur le circuit oscillant.

7. Transpondeur selon la revendication 5 ou 6, comportant au moins un élément capacitif (C2pi, C2'pi) commutable (Ti, T'i) de désaccord du circuit oscillant.

**Patentansprüche**

1. Ein Verfahren zum Managen der Leistung in einem elektromagnetischen Transponder (2) im Feld eines Anschlusses (1) wobei die folgenden Schritte vorgesehen sind:

Auswerten (40) des Leistungsverbrauchs der Transponderschaltungen; und
wenn dieser Leistungsverbrauch unterhalb einer Schwelle liegt, Auswerten des Stromkopplungsfaktors (k) zwischen dem Transponder und dem Anschluss (1) und, gemäß der Stromkopplung:

Bewirken (52) einer Vergrößerung des Transponderleistungsverbrauchs; oder
Bewirken (50) einer Verstimmung einer Oszillatorschaltung des Transponders,
wobei die Auswertung des Kopplungsfaktors einen Vergleich umfasst eines Verhältnisses (r) des Stromkopplungsfaktors des Transponders mit dem Anschluss und einer Position optimaler Kopplung ($k_{opt]R20}$) mit einem ersten Wert (R20) einer Widerstandslast (R2), wobei dieses Verhältnis (r) erhalten wird aus:

ersten Daten, relativ zu dem Pegel einer Gleichspannung ($V_{Ca}$) vorgesehen durch einen Gleichrichter (23) an der Oszillatorschaltung (L2, C2), gemessen und gespeichert (42) für den ersten Wert (R20) der Widerstandslast (R2); und
zweite Daten relativ zu dem Pegel der erwähnten Gleichspannung, gemessen und gespeichert (46) für einen zweiten Wert (R21) der Widerstandslast.

2. Das Verfahren nach Anspruch 1, wobei die Verstimmung (50) zu einem Wert erfolgt, der eine Fernversorgung des Transponders aufrecht erhält.

3. Das Verfahren nach Anspruch 1 oder 2, wobei eine Veränderung der Widerstandslast (R2) zwischen ersten und zweiten Werten (R20, R21) erhalten wird durch modifizieren des Leistungsverbrauchs der Vearbeitungsschaltungen (27) die der Transponder aufweist.

4. Das Verfahren nach Anspruch 3, wobei eine Veränderung der Widerstandslast (R2) zwischen den ersten und zweiten Werten (R20, R21) erhalten wird durch Schalten eines Widerstands-Retro-Modulationselements (30) wie es der Transponder (2) aufweist.

5. Ein elektromagnetischer Transponder der folgendes aufweist:

eine Oszillatorschaltung (L2, C2) stromaufwärts einer Gleichrichterschaltung (23) und in der Lage eine Gleichspannung ($V_{Ca}$) vorzusehen, wenn der Transponder sich im Magnetfeld eines Anschlusses (1) befindet; und
mindestens eine Verarbeitungseinheit (27) programmiert zur Implementierung des Verfahrens nach irgendeinem der Ansprüche 1-4.

6. Der Transponder nach Anspruch 5, der ferner mindestens ein schaltbares Widerstandselement (30, 40) aufweist, welches funktionsmäßig parallel mit der Oszillatorschaltung verbunden werden kann.

7. Der Transponder nach Anspruch 5 oder 6 der mindestens ein schaltbares (Ti, T'i) kapazitives Element (C2pi, C2'pi) aufweist zum Verstimmen der Oszillatorschaltung.

**Claims**

1. A method for managing power in an electromagnetic transponder (2) in the field of a terminal (1), comprising the steps of:

evaluating (40) the power consumption of the transponder circuits; and

if this power consumption is below a threshold, evaluating the current coupling factor (k) between the transponder and the terminal (1) and, according to the current coupling:

causing (52) an increase of the transponder power consumption; or
causing (50) a detuning of an oscillating circuit of the transponder,
the evaluation of the coupling factor including a comparison of a ratio (r) of the current coupling factor of the transponder with the terminal and a position of optimum coupling ($k_{opt]R20}$) with a first value (R20) of a resistive load (R2), said ratio (r) being obtained from:

first data, relative to the level of a D.C. voltage ($V_{Ca}$) provided by a rectifier (23) across the oscillating circuit (L2, C2), measured and stored (42) for the first value (R20) of the resistive load (R2); and
second data, relative to the level of said D.C. voltage, measured and stored (46) for a second value (R21) of resistive load.

2. The method of claim 1, wherein the detuning (50) is performed towards a value maintaining a remote supply of the transponder.

3. The method of claim 1 or 2, wherein a variation of the resistive load (R2) between the first and second values (R20, R21) is obtained by modifying the power consumption of processing circuits (27) comprised by the transponder.

4. The method of claim 3, wherein a variation of the resistive load (R2) between the first and second values (R20, R21) is obtained by switching a resistive retromodulation element (30) comprised by the transponder (2).

5. An electromagnetic transponder comprising:

an oscillating circuit (L2, C2) upstream of a rectifying circuit (23) capable of providing a D.C. voltage ($V_{Ca}$) when the transponder is in the magnetic field of a terminal (1); and
at least one processing unit (27) programmed to implement the method of any of claims 1 to 4.

6. The transponder of claim 5, further comprising at least one switchable resistive element (30, 40) capable of being functionally connected in parallel to the oscillating circuit.

7. The transponder of claim 5 or 6, comprising at least one switchable (Ti, T'i) capacitive element (C2pi, C2'pi) for detuning the oscillating circuit.

Fig 1

Fig 3

Fig 2

Fig 4

Fig 6

MES I $_{]R20}$ — 40

I $_{]R20}$ > Imin — 41

Y

N

MES V$_{C2 ]R20}$ — 42

R20 → R21 — 43

MES I $_{]R21}$ — 44

I $_{]R21}$ > Imin — 45

Y

N

MES V$_{C2 ]R21}$ — 46

R21 → R20 — 47

$r = \left(\dfrac{k}{kopt]R20}\right)^2$ — 48

h < r < H — 49

Y

N

CAL V$_{C2opt ]R2x}$ — 51

R20 → R2x — 52

I $_{]R2x}$ > Imin — 53

Y

N

C2$_{tun}$ → C2$_{det}$ — 50

CONTINUE

**Fig 5**

Fig 7

## RÉFÉRENCES CITÉES DANS LA DESCRIPTION

### Documents brevets cités dans la description

- GB 2321725 A
- US 20070164122 A
- EP 1045325 A
- EP 0857981 A